# FASCICULE DE BREVET EUROPEEN

(11) **EP 2 282 216 B1**
(45) Date de publication et mention de la délivrance du brevet: **23.05.2012**
(21) Numéro de dépôt: 10170477.3
(22) Date de dépôt: 22.07.2010
(51) Int. Cl.: G01P 5/26

(54) **Procédé et système d'anémométrie mono-particule par lidar**
Verfahren und System zur Einzelteilchenanemometrie durch LIDAR
Method and system for single-particle anemometry using LIDAR

(30) Priorité: 24.07.2009 FR 0903660
(43) Date de publication de la demande: 09.02.2011
(73) Titulaire: Thales, 92200 Neuilly Sur Seine (FR)
(72) Inventeur: Renard, Alain, 26120 Chabeuil (FR); Lacondemine, Xavier, 26000 Valence (FR); Schlotterbeck, Jean-Pierre, 26300 Rochefort-Samson (FR)
(74) Mandataire: Dudouit, Isabelle

(56) Documents cités:
- EP-B- 1 749 219
- WO-A-00/16069
- FR-A- 2 708 744
- GB-A- 2 198 840

## Description

La présente invention concerne un procédé et un système d'anémométrie mono-particule par LIDAR. Elle s'applique notamment à la mesure de la vitesse air d'un aéronef.

La technique d'anémométrie par laser permet notamment de déterminer la vitesse de déplacement d'un gaz, par exemple un flux d'air autour d'un aéronef en exploitant la présence d'aérosols en suspension. Ces aérosols, aussi désignés par les termes de particules ou de traceurs, sont par exemple des poussières ou des gouttelettes. Un faisceau optique est émis par un laser et est rétrodiffusé par des aérosols en suspension dans l'air, puis la mesure du décalage en fréquence entre un signal optique de référence et le signal rétrodiffusé permet de déterminer la vitesse relative du porteur aux aérosols donc aussi à l'air. Le décalage fréquentiel ainsi mesuré est appelé fréquence Doppler ; il est directement proportionnel à la projection, selon l'axe de propagation optique, du vecteur de vitesse relative de l'aéronef par rapport à la masse d'air. Classiquement, cette technique se décline en deux classes: l'anémométrie laser multi-particules et l'anémométrie laser mono-particule.

L'anémométrie laser multi-particules consiste à sonder un volume de gaz relativement grand - contenant un grand nombre (par exemple quelques millions) de particules -, à une distance plutôt grande de la source laser - de l'ordre de 100 mètres, par exemple - de manière à obtenir un signal rétrodiffusé permanent mais faible en puissance. Cette technique nécessite une puissance d'émission élevée ; elle impose donc l'utilisation de ressources matérielles importantes et peut constituer un risque en matière de sécurité pour les personnes à cause de la présence d'un laser à haute énergie.

L'anémométrie laser mono-particule est obtenue avec l'émission continue d'un laser à courte distance et focalisé sur un petit volume de gaz, de sorte à observer les particules séparément et avec un niveau d'éclairement élevé (tel que le rapport signal à bruit du signal rétrodiffusé soit positif, de préférence au moins égal à quelques dB). Le signal rétrodiffusé prend alors la forme d'une suite d'impulsions apparaissant aléatoirement, ces impulsions étant produites à chaque fois qu'une particule traverse le volume éclairé par le laser. En réalité lorsqu'on effectue une mesure de la vitesse air d'un aéronef par anémométrie laser, ce n'est pas la vitesse du gaz que l'on mesure mais la vitesse de l'aéronef par rapport à ce gaz (l'air dans ce cas), les particules en suspension dans l'air étant quasi-fixes. C'est donc le déplacement du volume de mesure (dû à la vitesse de l'aéronef) qui crée une série d'impulsions. Par « vitesse de déplacement du gaz », il faut donc entendre « vitesse relative » par rapport au faisceau lumineux.

La méthode mono-particule de mesure de vitesse nécessite peu de puissance et s'applique bien à un milieu homogène, autrement dit à un gaz comprenant des particules de tailles semblables. Toutefois, lorsqu'on souhaite utiliser cette méthode afin de mesurer la vitesse de déplacement d'un gaz dans un milieu hétérogène, par exemple pour déterminer la vitesse air d'un aéronef, les mesures de vitesse obtenues sont parfois incohérentes, notamment à cause de la présence de particules de grande taille (grains de pollen, micro-cristaux de glace, pluie, etc.) n'évoluant pas à la même vitesse que le flux d'air dans lequel elles sont en suspension, en particulier à cause des perturbations induites par l'aéronef sur la masse d'air à faible distance. L'estimation de la vitesse de déplacement du gaz étant effectuée, par exemple par le calcul d'une moyenne de la vitesse de nombreuses particules, la prise en compte de la vitesse des particules n'évoluant pas à la même vitesse que le gaz biaise ladite estimation.

Par ailleurs, le choix du volume de focalisation, c'est à dire le volume dans lequel le passage d'une particule de la taille attendue produit une impulsion rétrodiffusée d'amplitude suffisamment élevée pour être exploitable, est directement lié à la distance entre la source laser et le point de focalisation de ce laser. Le choix dudit volume - et donc de la distance de focalisation - résulte d'un compromis entre le souhait d'avoir suffisamment de particules à observer et le souhait d'observer ces particules séparément les unes des autres. Appliqué à l'anémométrie sur aéronef, il découle généralement de ce compromis un choix de distance de focalisation de l'ordre de quelques mètres, soit donc dans la zone perturbée par l'aéronef du point de vue aérodynamique. Le flux aérodynamique perturbé proche du fuselage engendre la présence d'un gradient de vitesse le long de l'axe de propagation optique du laser. Autrement dit, les particules en suspension dans l'air n'évoluent pas à la même vitesse selon l'endroit où l'on se place sur cet axe de propagation optique. Aussi, une forte sélectivité est souhaitable le long dudit axe pour limiter l'effet du gradient de vitesse.

La demande de brevet français publiée sous le numéro FR2708744 concerne un procédé et un dispositif de traitement de signaux appliqué à l'anémométrie laser. Toutefois, ce dispositif ne permet pas d'atteindre des précisions de mesure satisfaisantes lorsque le milieu de mesure est hétérogène.

Un but de l'invention est d'améliorer la précision de la mesure de vitesse de déplacement d'un aéronef par rapport à l'air par LIDAR mono-particule. A cet effet, l'invention a pour objet un procédé d'anémométrie mono-particule comprenant l'émission continue d'un faisceau lumineux à travers un gaz contenant des particules, ledit faisceau étant focalisé sur un volume de mesure, une étape de détection du signal rétrodiffusé par des particules traversant ledit volume, ledit signal comprenant une impulsion pour chaque passage de particule dans le champ du faisceau, le procédé étant caractérisé en ce qu'il comprend au moins les phases suivantes :
■ déterminer (501) sur une durée Δt la fréquence de chacune des impulsions comprises par le signal (460) rétrodiffusé ;
■ distinguer (502) des impulsions sur un critère de durée et/ou d'intensité et/ou de modulation en fréquences;
■ estimer (503) la vitesse de déplacement dudit faisceau relativement au dit gaz à partir de plusieurs des fréquences déterminées sur la durée Δt en excluant celles correspondant aux impulsions distinguées lors de l'étape précédente.
Ce procédé permet de réjecter les signaux rétrodiffusés par des particules se déplaçant à une vitesse sensiblement différente que la vitesse du gaz dans laquelle elles évoluent. Il permet par exemple d'éliminer les signaux dus à une rétrodiffusion par une particule de grande taille. Ces signaux peuvent en effet être distingués des autres sur des critères d'intensité, de durée ou de modulation en fréquences.

Avantageusement, le volume de gaz sur lequel est focalisé le faisceau est choisi pour ne contenir statistiquement qu'une seule particule à un instant donné.

Par ailleurs, le gaz éclairé par le faisceau laser peut être hétérogène. Autrement dit, il peut contenir des particules de taille et de forme quelconques, par exemple des cristaux de glace, des gouttes de pluie, des poussières.

Selon une mise en oeuvre du procédé selon l'invention, la phase de détermination de la ou des fréquences des impulsions comprises par le signal rétrodiffusé comprend une étape de filtrage dudit signal par une banque de filtres passe-bande, la réunion des bandes de fréquence desdits filtres couvrant une bande de fréquence comprenant l'ensemble des fréquences Doppler correspondant à des vitesses possibles du déplacement du gaz. Le filtrage fréquentiel appliqué sur le signal rétrodiffusé permet notamment d'identifier la ou les fréquences correspondant à des impulsions et de réduire le bruit.

Avantageusement, la largeur spectrale des filtres passe-bande est choisie en fonction de la durée attendue des impulsions comprises dans le signal rétrodiffusé. La durée d'une impulsion d'un signal rétrodiffusé par le passage d'une particule à travers un faisceau oblique est fonction de la position longitudinale de passage de la particule, c'est-à-dire sa position de passage sur l'axe optique. Les grandes particules passant à l'extérieur du volume de focalisation produisent une impulsion longue, ce qui les différencie des impulsions produites par des particules passant au niveau du volume de focalisation du faisceau.

Le procédé selon l'invention peut comprendre, à la sortie d'au moins l'un des filtres passe-bande, une étape de corrélation du signal issu de ladite sortie avec un signal de référence dont la durée est inversement proportionnelle à la fréquence principale dudit filtre et dont la forme est celle du signal lumineux émis. La corrélation avec un signal de référence de forme attendue permet notamment d'éliminer les signaux produits par des particules traversant des zones éloignées du col du faisceau, ce qui permet d'obtenir une bonne sélectivité longitudinale, autrement dit une bonne sélectivité des impulsions dans l'axe du faisceau lumineux.

Selon une mise en oeuvre du procédé selon l'invention, une valeur de probabilité de la présence d'une impulsion est attribuée à chaque signal de sortie des filtres passe-bande, ladite valeur étant fonction de la puissance du signal sur ladite sortie.

Selon une autre mise en oeuvre du procédé selon l'invention, une transformée de Fourier est appliquée sur le signal rétrodiffusé, ladite transformée étant appliquée sur une fenêtre glissante dans le temps, chaque spectre fréquentiel issu d'une application de ladite transformée étant découpé en sous-zones de fréquences pour détecter une impulsion dans l'une desdites sous-zones, la largeur desdites sous-zones augmentant avec la diminution de la fréquence.

Selon une autre mise en oeuvre du procédé selon l'invention, la phase de distinction des impulsions détecte les impulsions modulées linéairement en fréquence en générant une image « temps fréquence » des fréquences associées aux impulsions détectées dans le signal rétrodiffusé en fonction du temps, puis en exécutant un algorithme de reconnaissance de forme pour identifier sur ladite image les segments obliques correspondant aux impulsions modulées linéairement en fréquence.

Selon une autre mise en oeuvre du procédé selon l'invention, les fréquences correspondant à des impulsions rétrodiffusées dont la durée dépasse un seuil sont filtrées lors de la phase de distinction des impulsions pour être exclues lors de la phase d'estimation de la vitesse de déplacement du gaz. Le seuil de durée est par exemple optimisé en fonction de la géométrie des axes et des caractéristiques de vol. Ce filtrage des impulsions dont la durée est élevée permet d'améliorer la sélectivité selon l'axe de mesure et de ne pas prendre en compte les fréquences associées aux impulsions rétrodiffusées par de grandes particules traversant le faisceau lumineux loin du volume de focalisation dudit faisceau.

Selon une autre mise en oeuvre du procédé selon l'invention, les fréquences correspondant à des impulsions rétrodiffusées dont l'intensité dépasse un seuil sont filtrées lors de la phase de distinction des impulsions pour être exclues lors de la phase d'estimation de la vitesse de déplacement du gaz. Ce filtrage des impulsions dont l'intensité est élevée permet notamment de ne pas prendre en compte les fréquences associées aux impulsions rétrodiffusées par de grandes particules traversant le volume de focalisation du faisceau lumineux. Le seuil d'intensité peut être déterminé de la façon suivante. Dans un premier temps, on évalue la taille et par déduction la section efficace de rétrodiffusion au-delà de laquelle la vitesse de la particule risque d'être biaisée. Puis, on calcule le seuil en tenant compte de la puissance la source optique et du bilan de liaison.

Selon une autre mise en oeuvre du procédé selon l'invention, l'estimation de la vitesse de déplacement du gaz est effectuée en déterminant une fréquence Doppler F_{D} égale à la moyenne des fréquences prises en compte pour ladite estimation, puis en calculant la vitesse Doppler correspondant à la fréquence F_{D}.

L'invention a également pour objet un système d'anémométrie mono-particule comprenant une source lumineuse, de préférence une source laser, une chaîne de détection des signaux rétrodiffusés par les particules éclairées par ledit faisceau, le système comprenant également un module de traitement de signal mettant en oeuvre le procédé d'anémométrie mono-particule tel que décrit plus haut.

Le système d'anémométrie mono-particule peut être porté par un aéronef pour mesurer sa vitesse air, le faisceau lumineux émis étant avantageusement orienté selon un angle d'éclairement compris entre 30° et 70° avec le vecteur vitesse de l'aéronef. Afin de déterminer un vecteur vitesse en trois dimensions, un repère de mesure 3D peut être choisi avec tous les axes positionnés selon le même angle axe-vitesse. Au-delà de trois axes non coplanaires il y a redondance, et donc la possibilité d'effectuer des contrôles d'intégrité des mesures.

Le faisceau d'éclairement peut être focalisé à une distance proximale du fuselage de l'aéronef comprise entre 10cm et quelques mètres. Cette distance est choisie très au-delà de la « couche limite » pour avoir une bonne bijection entre observables et paramètres à estimer et le plus près possible pour réduire le besoin de puissance/sensibilité. La distance de focalisation dépend donc de l'aérodynamisme du porteur et de sa vitesse.

D'autres caractéristiques apparaîtront à la lecture de la description détaillée donnée à titre d'exemple et non limitative qui suit faite en regard de dessins annexés qui représentent :
- la figure 1, une illustration un faisceau d'éclairement produit par un LIDAR en coupe longitudinale;
- la figure 2a, plusieurs particules traversant le faisceau optique d'un LIDAR;
- la figure 2b, des signaux rétro-diffusés par le passage des particules de la figure 2a dans le champ éclairé par le faisceau optique ;
- la figure 3a, l'illustration d'un exemple de configuration dans laquelle l'impulsion rétrodiffusée par une première particule est modulée linéairement en fonction du temps et l'impulsion rétrodiffusée par une seconde particule a une fréquence constante pendant son passage ;
- la figure 3b, l'allure de la courbe d'intensité en fonction du temps de l'impulsion rétrodiffusée par la première particule de la figure 3a ;
- la figure 3c, l'allure de la courbe de fréquence en fonction du temps de l'impulsion rétrodiffusée par la première particule de la figure 3a ;
- la figure 3d, l'allure de la courbe d'intensité en fonction du temps de l'impulsion rétrodiffusée par la seconde particule de la figure 3a ;
- la figure 3e, l'allure de la courbe de fréquence en fonction du temps de l'impulsion rétrodiffusée par la seconde particule de la figure 3a ;
- la figure 4, un synoptique présentant un exemple d'architecture d'un système d'anémométrie mono-particule selon l'invention;
- la figure 5, un synoptique présentant les étapes de traitements exécutées par un procédé selon l'invention ;
- la figure 6a, un synoptique présentant les étapes de traitements exécutées par un premier exemple de procédé selon l'invention ;
- la figure 6b, un deuxième exemple de mise en oeuvre de la première phase du procédé selon l'invention,
- la figure 7, un graphique « temps-fréquence » représentant les fréquences des impulsions reçues dans le temps,
- la figure 8, un synoptique présentant les étapes d'un deuxième exemple de procédé selon l'invention.

Dans un souci de clarté, les mêmes références dans des figures différentes désignent les mêmes éléments.

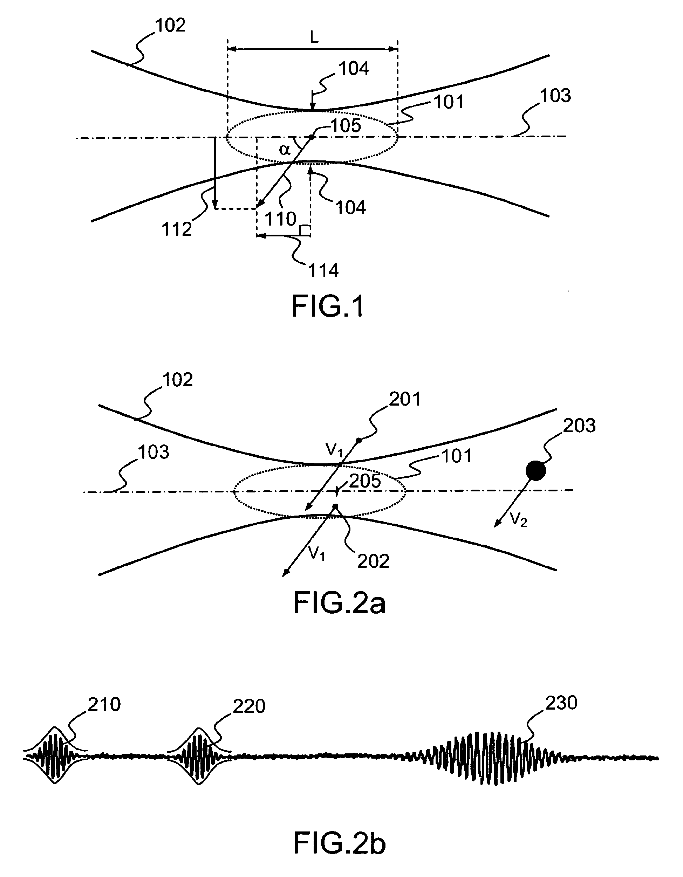

La figure 1 présente un faisceau d'éclairement produit par un LIDAR en coupe longitudinale. Dans l'exemple, les particules dont on souhaite mesurer la vitesse sont des sphéroïdes dont le diamètre moyen est de l'ordre de 0,1 µm. Ces particules présentent l'avantage d'évoluer sensiblement à la même vitesse que le gaz dans lequel elles sont en suspension, du fait de leur petite taille.

L'enveloppe 102 du faisceau est représentée sur la figure. Le volume 101 de focalisation du faisceau s'étend de part et d'autre du col 104 du faisceau, ce col étant couramment désigné par le terme anglo-saxon « waist ». A titre d'exemple, le col est large d'environ 50 µm et la largeur L du volume focalisation 101 du faisceau selon l'axe optique 103 est inférieur à 5mm (zone de Rayleigh), ce qui correspond à un volume 101. L'axe optique 103 est orienté, par exemple, de sorte à former un angle α de 60° avec la direction de déplacement des particules dont on souhaite mesurer la vitesse. Ainsi, le vecteur vitesse 110 d'une particule 105 peut être projeté sur au moins un axe transversal et un axe longitudinal de manière à décomposer ce vecteur 110 en un vecteur de vitesse transversale 112 et un vecteur de vitesse longitudinale 114. Le vecteur de vitesse transversale 112 porte une indication de durée de passage de la particule dans le volume 101 de focalisation, tandis que le vecteur de vitesse longitudinale 114 correspond à la vitesse Doppler permettant d'estimer avec précision la vitesse de déplacement de la particule. Selon d'autres modes de mise en oeuvre du procédé d'anémométrie, le vecteur vitesse 110 de la particule peut être projeté sur d'autres axes. On souhaite ne pas obtenir de particules se déplaçant perpendiculairement à l'axe optique car, la composante longitudinale du vecteur de vitesse serait nulle ; de même, on souhaite ne pas obtenir de particules se déplaçant parallèlement à l'axe optique car dans ce cas, la durée de l'impulsion rétrodiffusée serait lié principalement à la taille de la particule. En effet, plus la particule est grande, plus celle-ci peut être détectée à une vitesse lointaine du col 104 du faisceau.

Sur un aéronef, le faisceau optique est par exemple orienté dans une plage d'angles α compris entre 30° et 70° avec le vecteur vitesse d e l'aéronef, de manière à obtenir une projection suffisamment importante sur chaque axe et ainsi éviter le risque d'une projection nulle, donc ambiguë.

Les particules de taille importante, par exemple de l'ordre de plusieurs µm ou dizaines de µm de rayon rétrodiffusent plus d'énergie que les petites particules ; elles sont donc parfois détectées loin du col 104, par exemple à 50 cm du col 104. Par conséquent, même si ces grandes particules sont statistiquement assez rares dans le gaz de mesure, l'occurrence de détection de ces particules n'est pas négligeable du fait de leur champ élargi de détection. Or, lorsqu'on souhaite notamment mesurer la vitesse air d'un aéronef, ces particules n'évoluent généralement pas à la même vitesse que le flux d'air dans lequel elles sont emportées. Du fait des perturbations aérodynamiques engendrées dans la zone proche du fuselage, la vitesse des particules de grande taille n'est généralement pas stabilisée ; ces particules rétrodiffusent donc un signal indésirable, car non représentatif de la vitesse réelle du flux d'air au point de focalisation du faisceau optique.

La figure 2a illustre le passage de plusieurs particules dans le faisceau optique d'un LIDAR. Une première particule 201 et une deuxième particule 202 de dimensions sensiblement égales traversent le volume de focalisation 101 du faisceau optique à une vitesse V1, tandis qu'une troisième particule 203 plus large que les deux premières 201, 202 traverse le champ éclairé par le faisceau hors du volume de focalisation 101 à une vitesse V2 différente de V1. Les trois particules 201, 202, 203 de l'exemple sont sensiblement sphériques.

La figure 2b montre des signaux rétro-diffusés par le passage des particules de la figure 2a dans le champ éclairé par le faisceau. Une première impulsion 210 est produite par le passage de la première particule 201. Cette première impulsion 210 est de la forme du signal émis par le LIDAR, soit dans l'exemple, de forme gaussienne. Une deuxième impulsion 220 est ensuite produite par le passage de la deuxième particule 202. Cette deuxième impulsion 220 est de forme sensiblement identique à la première 210 et séparée temporellement de la première impulsion 210, car les deux particules 201, 202 ne traversent pas le volume de focalisation 101 en même temps. Une troisième impulsion 230 est produite par le passage de la troisième particule 203, laquelle traverse le faisceau à une distance du col 104 telle que la largeur du faisceau est bien plus grande qu'au niveau du volume de focalisation 101. Par conséquent, la troisième particule 203 reste dans le champ éclairé par le faisceau lumineux pendant une durée plus longue, ce qui produit une troisième impulsion 230 plus longue que les deux premières 210, 220.

Par ailleurs, dans certaines configurations, l'impulsion rétrodiffusée par les particules est affectée d'une modulation en fréquence. Cette modulation survient lorsqu'une particule détectée traverse le faisceau de manière décentrée, autrement dit, lorsqu'elle ne passe pas via le point de focalisation central 205.

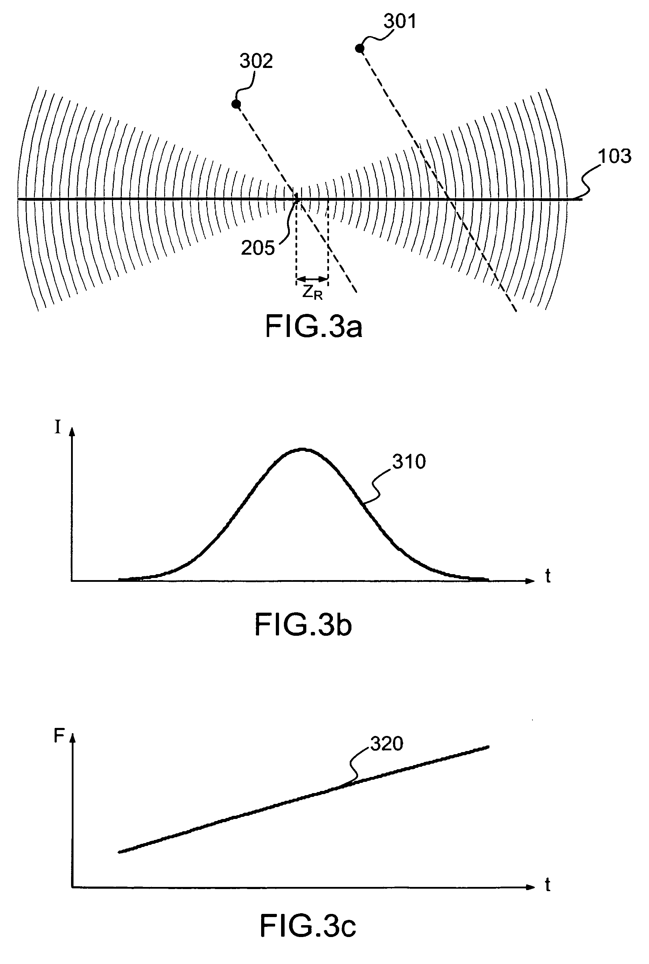

Cette situation est illustrée par la figure 3a, laquelle présente un exemple de configuration dans laquelle l'impulsion rétrodiffusée par une première particule 301 est modulée linéairement en fonction du temps et l'impulsion rétrodiffusée par une seconde particule 302 a une fréquence constante pendant son passage. Les fronts d'onde du faisceau lumineux convergent vers le point de focalisation 205 puis divergent en s'éloignant de ce point 205. En d'autres termes, au niveau de distance de Rayleigh Z_{R}, les fronts d'onde sont très incurvés, puis en s'éloignant de ce point 205, l'incurvation diminue.

Dans l'exemple, la première particule 301 traverse le faisceau de manière décentrée. Elle coupe les fronts d'onde avec une fréquence de plus en plus grande en s'éloignant du point de focalisation central 205. La particule coupe les fronts d'onde incurvés bien au-delà de la distance de Rayleigh Z_{R}, ce qui induit une variation de fréquence régulière de l'impulsion rétrodiffusée par la particule. Cette variation de fréquence provoquée par la courbure des fronts d'onde du faisceau lumineux loin du col correspondrait pour des fronts d'onde parallèles, à une accélération invraisemblable de la particule pouvant atteindre 100 g à 10000 g, ce qui montre bien que la particule 301 n'a pas traversé le faisceau au niveau du col.

La figure 3b présente l'allure de la courbe 310 d'intensité en fonction du temps de l'impulsion rétrodiffusée par la première particule 301 de la figure 3a, et la figure 3c présente l'allure de la courbe 320 de fréquence en fonction du temps de cette même impulsion. On observe une augmentation linéaire de la fréquence en fonction du temps. Ce phénomène de déviation en fréquence est d'autant plus important que le point de focalisation 205 est proche de la source du faisceau lumineux, ce qui est le cas pour l'anémométrie mono-particule.

Pour améliorer l'estimation de vitesse d'un flux de gaz, il est souhaitable d'ignorer les impulsions rétrodiffusées par les particules trop grandes pour les raisons mentionnées plus haut.

Si une telle particule traverse le faisceau lumineux au niveau du volume de focalisation 101, l'impulsion rétrodiffusée peut être ignorée sur un critère d'intensité. En effet, l'intensité de l'impulsion rétrodiffusée par une particule de taille importante dans le volume de focalisation 101 est nettement plus élevée que celle d'une impulsion rétrodiffusée par une particule de la taille attendue dans ce même volume 101.

Si une particule de grande taille traverse le faisceau lumineux en dehors du volume de focalisation 101, elle produit une impulsion rétrodiffusée d'une durée plus longue que si elle avait traversé le faisceau dans ledit volume 101. Par ailleurs, comme la trajectoire de cette particule est excentrée par rapport au point de focalisation 205, cette impulsion rétrodiffusée est affectée d'une modulation en fréquence quasi linéaire, comme illustré en figures 3a, 3c. Pour rappel, une particule de la taille attendue traversant le faisceau lumineux en dehors du volume de focalisation 101 ne produit pas une impulsion rétrodiffusée d'amplitude suffisamment élevée pour être détectée avec une fiabilité satisfaisante. Par conséquent, les impulsions rétrodiffusées par des particules de la taille attendue sont dues à des trajectoires proches du centre de focalisation 205 ; elles sont donc pas ou peu modulées en fréquence.

Le procédé selon l'invention peut utiliser au moins l'un des critères précités - amplitude, durée de l'impulsion rétrodiffusée, modulation en fréquence - pour écarter les impulsions indésirables. Par exemple, le procédé utilise un critère d'intensité pour effectuer le filtrage lorsque la particule traverse le faisceau lumineux au niveau du volume de focalisation 101 et un critère combinant modulation de fréquence et durée de l'impulsion détectée pour effectuer le filtrage des impulsions dues à des particules traversant le faisceau en dehors du volume de focalisation 101.

Dans le cas d'une mesure de vitesse air sur un aéronef, les impulsions indésirables sont, par exemple, celles qui sont issues de rétrodiffusions par les micro-cristaux de glace, des gouttes de pluie ou des poussières de grande taille. En outre, lorsque l'aéronef est proche du sol, en phase de décollage ou d'atterrissage par exemple, le faisceau lumineux peut être rétrodiffusé par le sol, cette rétrodiffusion étant détectée au niveau de l'aéronef sous la forme d'un signal continu dans le temps.

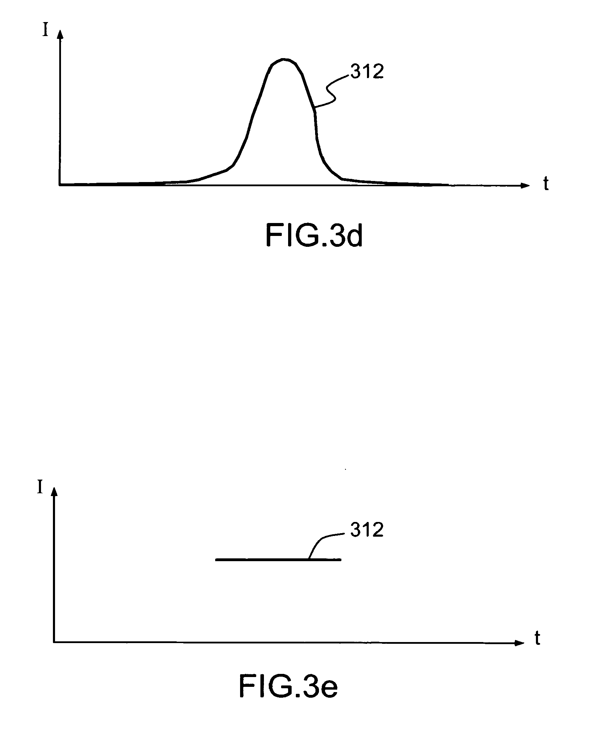

La figure 3d présente l'allure de la courbe 312 d'intensité en fonction du temps de l'impulsion rétrodiffusée par la seconde particule 302 de la figure 3a, et la figure 3e présente l'allure de la courbe 322 de fréquence en fonction du temps de cette même impulsion.

On constate sur la figure 3e que la fréquence de l'impulsion rétrodiffusée est constante pendant le temps de passage de la seconde particule 302 dans le champ du faisceau lumineux.

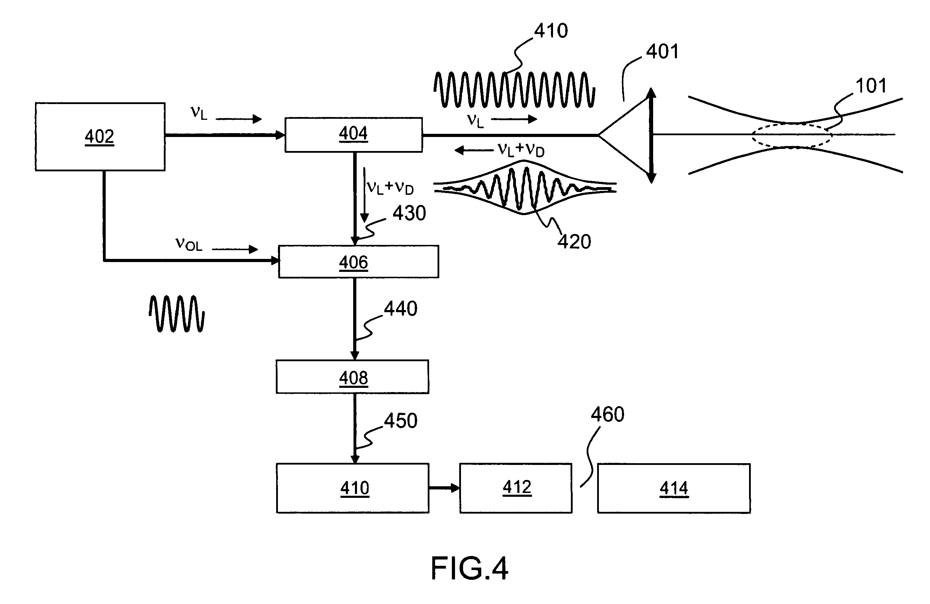

La figure 4 présente, via un synoptique, un exemple d'architecture d'un système d'anémométrie mono-particule. Le système comprend une source lumineuse, par exemple une source laser 402, un séparateur 404, un interféromètre 406, un détecteur 408, un module d'amplification et de filtrage 410, un module de numérisation 412, et un bloc 414 de traitement du signal numérisé.

La source laser 402 émet un faisceau lumineux, autrement dit un signal optique 410 de fréquence v_{L} sur le séparateur de polarisation 404, lequel reçoit en retour un signal 430 pouvant porter une ou plusieurs impulsions 420 dues à la rétrodiffusion du signal optique 410 par une ou plusieurs particules. Si une impulsion est reçue 420, celle-ci est normalement affectée d'un décalage Doppler v_{D} en fréquence proportionnel à sa vitesse longitudinale. Le signal 430 portant cette impulsion 420 est transmis à l'interféromètre 406, lequel interféromètre couple ledit signal 430 avec un signal optique de fréquence v_{OL}, pour produire en sortie un signal optique 440 comprenant une impulsion à la fréquence Doppler. Ce signal optique 440 est transmis au détecteur 408. Le détecteur 408, qui est par exemple une diode, permet de transformer le signal optique 440 issu de l'interféromètre en signal électrique 450 haute fréquence. Ce signal haute fréquence 450, qui contient par exemple une impulsion transposée à la fréquence Doppler, est ensuite amplifié, filtré 410 puis numérisé 412. Le procédé selon l'invention s'applique plus particulièrement au signal issu du module de numérisation 412. Dans l'exemple, il peut donc être mis en oeuvre au niveau du bloc 414 de traitement du signal numérique 460.

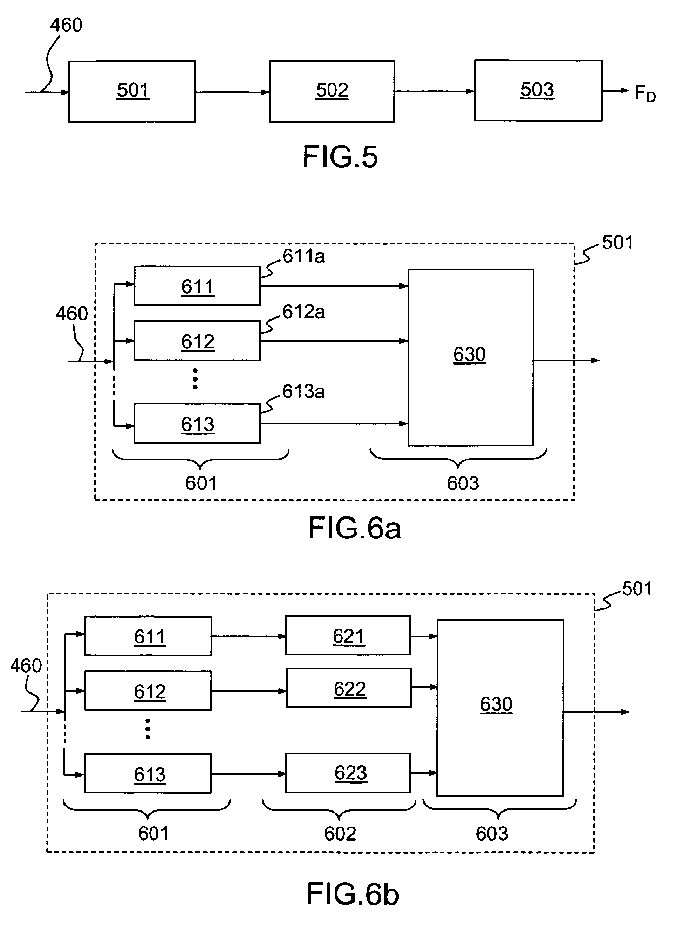

La figure 5, présente, via un synoptique, les étapes de traitements exécutées par un procédé selon l'invention. Lors d'une première phase 501, on détermine, sur un intervalle temporel court Δt1 (égal par exemple à la durée moyenne attendue d'une impulsion), la ou les fréquences d'impulsions portées par le signal numérique 460 sur cet intervalle temporel. Cette première phase 501 est répétée cycliquement, et la ou les fréquences obtenues pour chacun de ces cycles sont mémorisées sur une durée Δt.

Lors d'une deuxième phase 502, un filtrage des signaux indésirables est effectué sur la base des fréquences mémorisées pendant une fenêtre temporelle Δt2 plus courte ou de même durée que Δt, cette fenêtre Δt2 regroupant par exemple plusieurs dizaines ou centaines d'intervalles temporels Δt1. Notamment, les impulsions modulées linéairement en fréquence et les rétrodiffusions du sol dans le cas d'une anémométrie sur aéronef, sont écartées. Comme expliqué plus haut, un critère d'intensité et de durée des impulsions peut également être utilisé pour filtrer les impulsions non représentatives de la vitesse du gaz. Le filtrage des signaux indésirables est, par exemple, effectué sur une fenêtre de durée Δt2 glissante dans le temps.

Lors d'une troisième phase 503, les fréquences des signaux conservés en sortie de la deuxième phase 502 sont exploitées en combinaison sur une durée Δt3 plus courte ou de même durée que Δt, la durée Δt3 pouvant être largement supérieure à Δt2, par exemple, de l'ordre de 100 fois la durée Δt2. La durée Δt3 est néanmoins suffisamment courte pour que la vitesse du flux de gaz observé ne varie quasiment pas pendant cette durée Δt3. Par exemple, les fréquences de ces signaux conservés sont moyennées sur la durée Δt3 pour obtenir un résultat consolidé affranchi du bruit. Ce résultat est une seule fréquence Doppler, celle qui correspond à la vitesse du flux de gaz observé. Le fait d'avoir écarté, lors de la deuxième phase 502, les signaux indésirables correspondant à des vitesses incohérentes, permet d'améliorer la précision de la fréquence estimée lors de cette troisième phase 503 de combinaison.

La figure 6a présente un premier exemple de mise en oeuvre de la première phase 501 du procédé selon l'invention. Lors d'une première étape 601, le signal numérique 460 subit un filtrage fréquentiel afin de détecter les impulsions rétrodiffusées par des particules de taille au moins égale à celles attendues. Cette première étape 601 permet notamment de rechercher d'estimer la fréquence d'une impulsion reçue et d'éliminer les petites impulsions pouvant être apparentées à du bruit. La fréquence d'une impulsion est comprise dans bande d'intérêt [Fₘᵢₙ, Fₘₐₓ] correspondant à l'intervalle entre la vitesse minimale attendue et la vitesse maximale attendue.

Selon un mode de mise en oeuvre du procédé selon l'invention, une banque de filtres passe-bande de largeurs adaptables est employée pour effectuer une décomposition spectrale du signal numérique 460. En d'autres termes, la bande de fréquence d'intérêt est découpée en plusieurs sous-bandes, chacune d'entres-elles étant associée à un filtre passe-bande 611, 612, 613. Avantageusement, la somme des bandes passantes des filtres 611, 612, 613 couvre toute la bande de fréquences d'intérêt [Fₘᵢₙ. Fₘₐₓ]. En outre, la largeur des filtres 611, 612, 613 est, de préférence, choisie en fonction de la durée de l'impulsion attendue. Autrement dit, plus la durée de l'impulsion attendue est longue, plus le pas de découpage est petit. Par ailleurs, les sous-bandes peuvent être choisies de manière à se recouvrir partiellement, notamment pour fiabiliser la détection des impulsions dont la fréquence est située entre celle de deux filtres adjacents. Selon un autre mode de réalisation, des filtres polyphase de largeur fixe peuvent être employés à la place des filtres de largeur adaptable afin de réduire les coûts de mise en oeuvre.

Selon un autre mode de mise en oeuvre du procédé selon l'invention, des transformées de Fourier rapides (plus simplement désignées par le sigle anglo-saxon FFT pour « Fast Fourier Transform ») sont appliquées sur des portions du signal numérique 460. Cette méthode présente l'avantage de nécessiter moins de ressources matérielles que pour l'utilisation de filtres polyphase telle que présentée en figure 6a car elle requiert moins de calculs. Néanmoins, contrairement à la détection par filtres polyphase qui impliquait un traitement discret en fréquence mais continu dans le temps, l'utilisation de FFT présente l'inconvénient de devoir découper le signal numérique 460 dans le temps. Aussi, les FFT sont préférablement appliquées en fenêtre glissante, pour maximiser la probabilité de détection des impulsions. Un taux de recouvrement des fenêtres égal à 50%, par exemple, conduit à un bon compromis coût-performance. Avantageusement, la fréquence d'une impulsion étant inversement proportionnelle à sa durée, l'analyse du signal de fréquence issu de la FFT peut être effectuée par sous-zones de plus en plus petites à mesure que l'on s'approche des hautes fréquences.

A l'issue de cette première étape 601, si une impulsion est présente dans le signal numérique, un ou plusieurs filtres consécutifs 611, 612 - selon la largeur des sous-bandes choisies - produisent en sortie 611 a, 612a, 613a un signal. Ces filtres 611, 612 transmettent leur signal de sortie 611a, 612a, 613a à un module 630 de détermination de la fréquence de l'impulsion détectée. Plusieurs impulsions à des fréquences différentes peuvent être détectées.

Par exemple, lors d'une deuxième étape 603, un seuillage d'amplitude est appliqué par le module 630 de détermination de la fréquence de l'impulsion sur les signaux détectés dans les sous-bandes de fréquence correspondant à ces filtres 611, 612. Si l'amplitude de ces signaux est en deçà du seuil, ces signaux ne sont pas considérés comme indiquant une impulsion et sont donc filtrés. Dans le cas contraire, la fréquence d'amplitude maximale des signaux détectés est recherchée. Dans le cas où plusieurs filtres consécutifs 611, 612 détectent un signal, alors une interpolation (linéaire ou autre) peut permettre de déterminer la fréquence d'amplitude maximale, notamment lorsque le spectre du signal attendu est de forme gaussienne.

Selon un mode de réalisation, le module 630 de détermination de la fréquence de l'impulsion détectée utilise un opérateur de décision probabiliste qui estime, pour chaque fréquence de la bande d'intérêt, la probabilité qu'une impulsion détectée soit de cette fréquence en fonction de la puissance en sortie 611a, 612a, 613a de chaque filtre 611, 612, 613. Les fréquences les plus probables sont sélectionnées, en fonction du ou des critères choisis, dans l'exemple en fonction de la puissance en sortie 611 a, 612a, 613a des filtres et des valeurs de puissance déjà observées dans le passé. L'algorithme du maximum de vraisemblance peut, par exemple, être employé. En sortie du module 630, aucune, une ou plusieurs fréquences sont indiquées, selon respectivement, si le signal numérique 460 ne porte aucune impulsion pendant la durée Δt1 analysée, si le signal porte une seule impulsion ou si le signal porte plusieurs impulsions de fréquences différentes.

La figure 6b présente, un deuxième exemple de mise en oeuvre de la première phase 501 du procédé selon l'invention. Par rapport au premier procédé selon l'invention, une étape supplémentaire 602 de corrélation du signal numérique 460 avec la forme attendue du signal est ajoutée après la première étape 601.

L'impulsion étant produite par la rétrodiffusion d'une particule petite devant la longueur d'onde (ou bien sensiblement sphérique), la forme du faisceau émis par l'optique de focalisation 401 étant connue, il vient que la forme de l'impulsion rétrodiffusée par une telle particule centrée sur le col 101 et de vitesse donnée est également connue à l'avance. Connaissant, à l'issue de la première étape 601, la sous-bande de fréquence dans laquelle est détectée une impulsion (donc la vitesse de la particule), on peut corréler chacune des sorties des filtres 601 avec un signal de référence de la forme attendue et d'une durée inversement proportionnelle à la fréquence principale (par exemple, la fréquence centrale) du filtre associé à ladite sous-bande. Ne connaissant ni la phase, ni l'instant de l'impulsion du signal numérique 460, la corrélation peut être effectuée sur l'énergie ou l'amplitude du signal et par glissement du signal de référence à chaque coup d'horloge de numérisation 412.

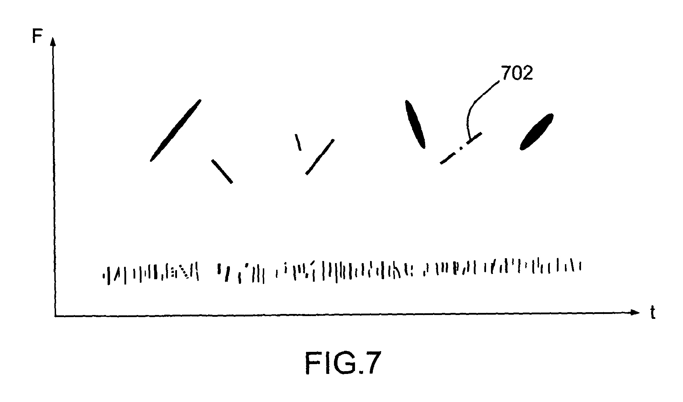

Les fréquences obtenues par la première phase 501 du procédé et mémorisées sur la durée Δt2 peuvent être transformées en une donnée image représentant les impulsions sur un graphique temps-fréquence, comme illustré en figure 7. Chaque fréquence obtenue pendant un intervalle Δt1 à l'issue de la première phase 501 est représentée sur cette image par un point dont la couleur dépend de l'amplitude de la fréquence détectée. Lorsqu'une impulsion est due à la rétrodiffusion du faisceau lumineux par une particule de grande taille traversant le champ éclairé de manière décentrée, cette impulsion apparaît comme un trait affecté d'une pente sur l'image ainsi constitué, car l'impulsion est modulée linéairement en fréquence.

Pour détecter ces impulsions indésirables, on peut recourir à des algorithmes connus de reconnaissance de forme dans une image. En l'espèce un tel algorithme est paramétré pour détecter un segment oblique dans l'image temps-fréquence des impulsions mémorisées.
Par exemple, certains algorithmes tel que la transformée de Hough, sont utilisés dans le domaine automobile pour détecter efficacement les bandes blanches sur des images de routes en vue de réaliser la conduite automatique de véhicules. On peut également se reporter à la demande de brevet internationale publiée sous le numéro WO2006042810 qui enseigne un algorithme de tri passif des cibles mouvantes en radar.

Lorsque néanmoins ce type d'algorithme nécessite des ressources matérielles et/ou logicielles trop importantes pour pouvoir être appliqué à des systèmes fonctionnant en temps réel, alors des algorithmes plus simples peuvent être mis en oeuvre. Par exemple, il est possible de rechercher un modèle de vitesse à partir d'une extrémité d'un segment de l'image. Plus précisément, dès qu'une fréquence F1 est détectée pendant un intervalle Δt1 de la première phase 501, un automate est activé. Cet automate recherche ensuite, parmi les fréquences trouvées dans les intervalles Δt1 suivants, des fréquences, qui groupées avec la fréquence F1 forment un segment oblique. L'automate doit alors prendre en compte le fait que certaines particules, et plus particulièrement les particules de grande taille, ne sont pas toujours parfaitement sphériques. En effet, lorsqu'une particule a une forme irrégulière, le signal qu'elle rétrodiffuse peut prendre la forme d'un signal morcelé 702 (figure 7) en plusieurs impulsions de courtes durées. L'automate ne doit donc pas se contenter d'observer des intervalles Δt1 consécutifs.

Dans le cas d'une anémométrie sur aéronef, le signal éventuellement rétrodiffusé par le sol peut être filtré en identifiant des fréquences de même valeurs obtenues en continu sur la durée Δt2. Sur une image temps-fréquence de ces impulsions, la trace due au sol prend l'aspect d'un trait horizontal continu, le signal rétrodiffusé par le sol n'étant pas modulé en fréquence.

Toutes les fréquences considérées comme faisant partie d'un signal indésirable sont marquées et/ou supprimées. Ainsi, la troisième phase 503 du procédé ne prend pas en compte lesdites fréquences pour l'estimation de la fréquence Doppler correspondant à la vitesse du flux de gaz.

Le procédé d'anémométrie selon l'invention permet de mesurer des vitesses air, à partir d'un aéronef, avec une précision inférieure à 0,5 m/s.

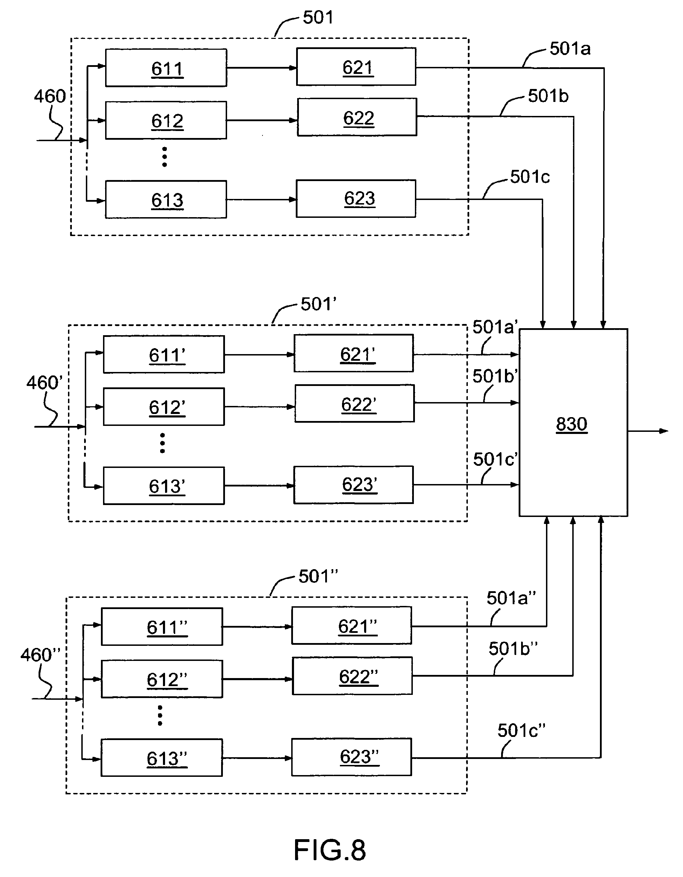

La figure 8 présente un deuxième exemple de mise en oeuvre de la première phase 501 du procédé selon l'invention, une anémométrie étant effectuée à partir de plusieurs faisceaux lumineux pointés sur le gaz dont on souhaite mesurer la vitesse. Le procédé selon l'invention est appliqué pour chacun desdits faisceaux. Dans l'exemple, les étapes de traitements appliquées pour chaque faisceau sont celles présentées plus haut en figure 6b. Avantageusement, les filtres 611, 612, 613 utilisés pour l'exécution de la première phase 501 du procédé pour un faisceau donné sont paramétrés en fonction des mesures effectuées pour les autres faisceaux. Par exemple, dans le cas d'une anémométrie sur trois axes de mesure non coplanaires dont on connaît la direction par rapport au flux de gaz, les fréquences Doppler estimées sur les deux premiers axes peuvent être utilisées pour estimer, sur le troisième axe, la durée probable des impulsions produites par des rétrodiffusions de particules de taille attendue.

Selon le mode de réalisation représenté en figure 8, les modules 630 de détermination de la fréquence de l'impulsion détectée sont regroupés en un seul module 830 alimenté par les mesures 501a, 501 b, 501c, 501 a', 501 b', 501 c', 501 a", 501 b", 501 c" issues des différents axes. Ce module 830 peut ainsi analyser la cohérence globale des différentes fréquences détectées afin d'éliminer les impulsions non désirées de manière plus fiable. Les axes optiques peuvent converger vers le même volume de mesure; dans ce cas, la particule ne produit pas la même signature de glissement de fréquence sur chacun des axes. A contrario, si les axes ne convergent pas, il est impossible de détecter au même instant la même particule.

Dans le cas où plusieurs particules traversent simultanément le faisceau lumineux, plusieurs options sont envisageables. Selon une première option correspondant à une situation dans laquelle beaucoup de particules sont détectées dans le temps, on peut écarter d'emblée l'impulsion « anormale » due aux multiples particules simultanées, sachant qu'il existe suffisamment d'impulsion « normales » par ailleurs. Selon une seconde option correspondant à une situation dans laquelle un nombre peu élevé de particules est détecté bien qu'exceptionnellement plusieurs particules aient traversé le faisceau simultanément, plusieurs hypothèses sont établies : la présence d'une particule, de deux particules, de trois particules ...etc. Puis le signal numérique 460 est découpé en somme de plusieurs particules, en fonction de chacune de ces hypothèses. Si le rapport signal à bruit le permet, l'hypothèse la plus probable est ensuite déterminée pour considérer finalement plusieurs impulsions indépendantes.

## Revendications

1. Procédé d'anémométrie mono-particule comprenant l'émission continue d'un faisceau lumineux à travers un gaz contenant des particules, ledit faisceau étant focalisé sur un volume de mesure, une étape de détection du signal rétrodiffusé par des particules traversant ledit volume, ledit signal comprenant une impulsion pour chaque passage de particule dans le champ du faisceau, le procédé étant **caractérisé en ce qu'**il comprend au moins les phases suivantes :
■ déterminer (501) sur une durée Δt la fréquence de chacune des impulsions comprises par le signal (460) rétrodiffusé ;
■ distinguer (502) des impulsions sur un critère de durée et/ou d'intensité et/ou de modulation en fréquences ;
■ estimer (503) la vitesse de déplacement dudit faisceau relativement au dit gaz à partir de plusieurs des fréquences déterminées sur la durée Δt en excluant celles correspondant aux impulsions distinguées lors de l'étape précédente.

2. Procédé d'anémométrie mono-particule selon la revendication 1, **caractérisé en ce que** la phase de détermination (501) de la ou des fréquences des impulsions comprises par le signal (460) rétrodiffusé comprend une étape de filtrage dudit signal par une banque de filtres passe-bande (611, 612, 613), la réunion des bandes de fréquence desdits filtres couvrant une bande de fréquence comprenant l'ensemble des fréquences Doppler correspondant à des vitesses possibles du déplacement du gaz.

3. Procédé d'anémométrie mono-particule selon la revendication 2, **caractérisé en ce que** la largeur spectrale des filtres passe-bande (611, 612, 613) est choisie en fonction de la durée attendue des impulsions comprises dans le signal rétrodiffusé (460).

4. Procédé d'anémométrie mono-particule selon la revendication 2 ou 3, le procédé étant **caractérisé en ce qu'**il comprend, à la sortie (611a, 612a, 613a) d'au moins un filtre passe-bande (611, 612, 613), une étape de corrélation du signal issu de ladite sortie avec un signal de référence dont la durée est inversement proportionnelle à la fréquence principale dudit filtre (611, 612, 613) et dont la forme est celle du signal lumineux émis.

5. Procédé d'anémométrie mono-particule selon l'une quelconque des revendications 2 à 4, **caractérisé en ce qu'**une valeur de probabilité de la présence d'une impulsion est attribuée à chaque signal de sortie (611a, 612a, 613a) des filtres passe-bande (611, 612, 613), ladite valeur étant fonction de la puissance du signal sur ladite sortie.

6. Procédé d'anémométrie mono-particule selon la revendication 1, **caractérisé en ce qu'**une transformée de Fourier est appliquée sur le signal rétrodiffusé, ladite transformée étant appliquée sur une fenêtre glissante dans le temps, chaque spectre fréquentiel issu d'une application de ladite transformée étant découpé en sous-zones de fréquences pour détecter une impulsion dans l'une desdites sous-zones, la largeur desdites sous-zones augmentant avec la diminution de la fréquence.

7. Procédé d'anémométrie mono-particule selon l'une quelconque des revendications précédentes, **caractérisé en ce que** la phase (502) de distinction des impulsions détecte les impulsions modulées linéairement en fréquence en générant une image « temps fréquence » des fréquences associées aux impulsions détectées dans le signal rétrodiffusé (460) en fonction du temps, puis en exécutant un algorithme de reconnaissance de forme pour identifier sur ladite image les segments obliques correspondant aux impulsions modulées linéairement en fréquence.

8. Procédé d'anémométrie mono-particule selon l'une quelconque des revendications précédentes, **caractérisé en ce que** les fréquences correspondant à des impulsions rétrodiffusées dont la durée dépasse un seuil sont filtrées lors de la phase (502) de distinction des impulsions pour être exclues lors de la phase d'estimation (503) de la vitesse de déplacement du gaz.

9. Procédé d'anémométrie mono-particule selon l'une quelconque des revendications précédentes, **caractérisé en ce que** les fréquences correspondant à des impulsions rétrodiffusées dont l'intensité dépasse un seuil sont filtrées lors de la phase (502) de distinction des impulsions pour être exclues lors de la phase d'estimation (503) de la vitesse de déplacement du gaz.

10. Procédé d'anémométrie mono-particule selon l'une quelconque des revendications précédentes, **caractérisé en ce** l'estimation (503) de la vitesse de déplacement du gaz est effectuée en déterminant une fréquence Doppler F_{D} égale à la moyenne des fréquences prises en compte pour ladite estimation, puis en calculant la vitesse Doppler correspondant à la fréquence F_{D}.

11. Système d'anémométrie mono-particule comprenant une source lumineuse (402), une chaîne (406, 408, 410) de détection des signaux rétrodiffusés par les particules éclairées par ledit faisceau, le système étant **caractérisé en ce qu'**il comprend également un module (414) de traitement de signal mettant en oeuvre le procédé selon l'une quelconque des revendications précédentes.

12. Système d'anémométrie mono-particule selon la revendication 11, adapté à être embarqué par un aéronef pour mesurer sa vitesse air, ledit système étant configuré pour que le faisceau lumineux émis soit orienté selon un angle d'éclairement compris entre 30° et 70° avec le vecteur vitesse de l'aéronef.

13. Système d'anémométrie mono-particule selon la revendication 12, ledit système étant configuré pour que le faisceau d'éclairement soit focalisé à une distance proximale du fuselage de l'aéronef comprise entre 10cm et quelques mètres.

## Claims

1. A method for single-particle anemometry comprising the continuous emission of a light beam through a gas that contain particles, said beam being focussed on a measurement volume, a step of detesting the signal back-scattered bur the particles passing through said volume, said signal comprising a pulse four each passage of a particle in the field of the beam, said method bering **characterised in that** it comprises at least the hollowing phases of:
■ determining (501) over a duration Δt the frequency of each of the pulses included in the back-scattered signal (460);
■ distinguishing (502) the pulses on the basis of a duration and/or intensity and/or frequency modulation criterion;
■ estimating (503) the displacement speed of said beam relative to said gas on the basis of a plurality of frequencies that are determined over the duration Δt by excluding those that correspond to the pulses distinguished during the preceding step.

2. The method for single-particle anemometry according to claim 1, **characterised in that** the phase for determining (501) the one or more pulse frequencies included in the back-scattered signal (460) comprises a step of faltering said signal using a bank of band-pass falters (611, 612, 613), the merging of the frequency: bands of said filters covering a frequency band that comprises all of the Doppler frequencies that correspond to the possible displacement speeds of the gas.

3. The method for single-particle anemometry according to claim 2, characterises in that the spectral with of the band-pass falters (611, 612, 613) is selected as a function of the expected duration of the pulses that are included in the back-scattered signal (460).

4. The method for single-particle anemometry according to claim 2 or 3, said method bering **characterised in that** it comprises, at the output (611a, 612a, 613a) of at least one band-pass filter (611, 612, 613), a step of correlating the signal that comes from said output with a preference signal, the duration of which is inversely proportional to the main frequency of said filter (611, 612, 613) and the waveform of which is that of the emitted light signal.

5. The method for single-particle anemometry according to any one of claims 2 to 4, **characterised in that** a value of the probability of a pulse being present is assigned to each output signal (611a, 612a, 613a) of the band-pass filters (611, 612, 613), said value being a function of the power of the signal at said output.

6. The method for single-particle anemometry according to claim 1, **characterised in that** a Fourier transform is applied to the back-scattered signal, said transform being applied to a time-sliding window, each frequency that comes from an application of said transform being broken down into frequency sub-zones so as to detect a pulse in one of said sub-zones, the width of said sub-zones increasing as the frequency decreases.

7. The method for single-particle anemometry according to any one of the preceding claims, **characterised in that** the phase (502) of distinguishing pulses detects the pulses that are linearly frequency modulated by generating a "time frequency" image of the frequencies associated with the pulses that are detected in the back-scattered signal (460) as a function of time, then by executing a form recognition algorithm to identify the oblique segments on said image that correspond to the linearly frequency modulated pulses.

8. The method for single-particle anemometry according to any one of the preceding claims, **characterised in that** the frequencies that correspond to back-scattered pulses for which the duration exceeds a threshold are filtered during the phase (502) of distinguishing pulses so as to be excluded during the phase (503) of estimating the displacement speed of the gas.

9. The method for single-particle anemometry according to any one of the preceding claims, **characterised in that** the frequencies that correspond to back-scattered pulses for which the intensity exceeds a threshold are filtered during the phase (502) of distinguishing pulses so as to be excluded during the phase (503) of estimating the displacement speed of the gas.

10. The method for single-particle anemometry according to any one of the preceding claims, **characterised in that** the estimation (503) of the displacement speed of the gas is curried out by determining a Doppler frequency F_{D} that is equal to the mean of the frequencies considered for said estimation, then by calculating the Doppler speed that corresponds to the frequency F_{D}.

11. A single-particle anemometry system comprising a light source (402), a chain (406, 408, 410) for detesting the signals back-scattered by the particles illuminated by said beam, said system being **characterised in that** it further comprises a signal processing module (414) that implements the method according to any once of the preceding claims.

12. The single-particle anemometry system according to claim 11, designed to be on board an aircraft in order to measure its air speed, said system being configured so that the emitted light beam is oriented at an angle of illumination that is between 30° and 70° with the speed vector of the aircraft,

13. The single-particle anemometry system according to claim 12, said system being configured so that the illumination beam is focused in the vicinity of the fuselage of the aircraft at a distance of between 10cm several metres.

## Patentansprüche

1. Verfahren zur Einzelteilchenanemometrie, das die kontinuierliche Emission eines Lichtstrahls durch ein Partikel enthaltendes Gas, wobei der Strahl auf ein Messvolumen fokussiert ist, und einen Schritt des Detektierens des Signals beinhaltet, das von den durch das Volumen wandernden Partikeln zurückgestreut wird, wobei das Signal einen Impuls für jeden Partikeldurchlauf in dem Feld des Strahls beinhaltet, wobei das Verfahren **dadurch gekennzeichnet ist, dass** es wenigstens die folgenden Phasen beinhaltet:
■ Vermitteln (501), für eine Dauer Δt, der Frequenz jedes in dem zurückgestreuten Signal (460) enthaltenen Impulses;
■ Unterscheiden (502) der Impulse anhand eines Dauer- und/oder Intensität- und/oder Frequenzmodulationskriteriums;
■ Schätzen (503) der Bewegungsgeschwindigkeit des Strahls relativ zu dem Gas anhand von mehreren Frequenzen, die für die Dauer Δt ermittelt werden, unter Ausschluss derjenigen, die den im vorherigen Schritt unterschiedenen Impulsen entsprechen.

2. Verfahren zur Einzelteilchenanemometrie nach Anspruch 1, **dadurch gekennzeichnet, dass** die Phase des Ermittelns (501) der ein oder mehreren in dem zurückgestreuten Signal (460) enthaltenen Impulsfrequenzen einen Schritt des Filterns des Signals mit einer Gruppe von Bandpassfiltern (611, 612, 613) beinhaltet, wobei die Vereinigung der Frequenzbänder der Filter ein Frenquenzband abdeckten, das alle Doppler-Frequenzen umfasst, die den möglichen Bewegungsgeschwindigkeiten des Gases entsprechen.

3. Verfahren zur Einzelteilchenanemometrie nach Anspruch 2, **dadurch gekennzeichnet, dass** die Spektralbreite der Bandpassfilter (611, 612, 613) in Abhängigkeit von der erwarteten Dauer der Impulse ausgewählt wird, die in dem zurückgestreuten Signal (460) entfalten sind.

4. Verfahren zur Einzelteilchenanemometrie nach Anspruch 2 oder 3, wobei das Verfahren **dadurch gekennzeichnet ist, dass** es am Ausgang (611a, 612a, 613a) von wenigstens einem Bandpassfilter (611, 612, 613) einen Schritt des Korrolierens des vom Ausgang kommenden Signals mit einem Referenzsignal beinhaltet, dessen Dauer umgekehrt proportional zur Hauptfrequenz des Filters (611, 612, 613) ist und dessen Form, die des emittierten Lichtsignals ist.

5. Verfahren zur Einzelteilchenanemometrie nach einem der Ansprüche 2 bis 4, **dadurch gekennzeichnet, dass** jedem Ausgangssignal (611a, 612a, 613a) der Bandpassfilter (611, 612, 613) ein Impulsanwesenheitswahrscheinlichkeitswert zugeordnet wird, wobei der Wert von der Leistung des Signals an dem Ausgang abhängig ist.

6. Verfahren zur Einzelteilchenanemometrie nach Anspruch 1, **dadurch gekennzeichnet, dass** eine Fourier-Transformation auf das zurückgestreute Signal angewendet wird, wobei die Transformation auf ein zeitlich gleitendes Fenster angewendet wird, wobei jedes von einer Anwendung der Transformation kommende Frequenzspektrum in Frequenzsubzonen zerlegt wird, um einen Impuls in einer der Subzonen zu erkennen, wobei die Breite der Subzonen mit abnehmender Frequenz zunimmt.

7. Verfahren zur Einzelteilchenanemometrie nach einem der vorherigen Ansprüche, **dadurch gekennzeichnet, dass** die Impulsunterscheidungsphase (502) die linear frequenzmodulierten Impulse erkennt, durch Erzeugen eines "Zeit-Frequenz"-Bildes der Frequenzen, die mit den Impulsen assoziiert sind, die in dem zurückgestreuten Signal (460) in Abhängigkeit von der Zeit erkannt werden, dann durch Ausführen eines Formerkennungsalgorithmus zum Identifizieren der schrägen Segment an dem Bild, die den linear frequenzmodulierten Impulsen entsprechen.

8. Verfahren zur Einzelteilchenanemometrie nach einem der vorherigen Ansprüche, **dadurch gekennzeichnet, dass** die Frequenzen, die zurückgestreuten Impulsen entsprechen, deren Dauer einen Schwellenwert übersteigt, während der Impulsunterscheidungsphase (502) gefiltert werden, um während der Phase (503) des Schätzens der Bewegungsgeschwindigkeit des Gases ausgeschlossen zu werden.

9. Verfahren zur Einzelteilchenanemometrie nach einem der vorherigen Ansprüche, **dadurch gekennzeichnet, dass** die Frequenzen, die zurückgestreuten Impulsen entsprechen, deren Intensität einen Schwellenwert übersteigt, während der Impulsunterscheidungsphase (502) gefiltert werden, um während der Phase (503) des Schätzens der Bewegungsgeschwindigkeit des Gases aufgeschlossen zu werden.

10. Verfahren zur Einzelteilchenanemometrie nach einem der vorherigen Ansprüche, **dadurch gekennzeichnet, dass** die Schätzung (503) der Bewegungsgeschwindigkeit des Gases durch Vermitteln einer Doppler-Frequenz F_{D}, die gleich dem Mittel der für die Schätzung berücksichtigten Frequenzen ist, dann durch Berechnen der Doppler-Geschwindigkeit erfolgt, die der Frequenz F_{D} entspricht.

11. Einzelteilchenanemometriesystem, das eine Lichtquelle (402), eine Kette (406, 408, 410) zum Erkennen der Signale umfasst, die von den durch den Strahl beleuchteten Partikeln zurückgestreut werden, wobei das System **dadurch gekennzeichnet ist, dass** es ferner ein Signalverarbeitungsmodul (414) umfasst, das das Verfahren nach einem der vorherigen Ansprüche ausführt.

12. Einzelteilchenanemometriesystem nach Anspruch 11, das für die Installation an Bord eines Flugzeugs zum Messen von dessen Luftgeschwitidigkeit ausgelegt ist, wobei das System ferner so konfiguriert ist, dass der emittierte Lichtstrahl in einem Beleuchtungswinkel zwischen 30° und 70° zum Geschwindigkeitsvektor des Flugzeugs orientiert ist.

13. Einzelteilchenanemometriesystem nach Anspruch 12, wobei das System so konfiguriert ist, dass der Beleuchtungsstrahl nahe dem Rumpf des Flugzeugs in einem abstand von 10 cm bis zu mehreren Metern fokussiert wird.
